# EUROPEAN PATENT APPLICATION

(11) **EP 0 866 479 A2**
(43) Date of publication of application: **23.09.1998**
(21) Application number: 98400645.2
(22) Date of filing: 19.03.1998
(51) Int. Cl.: H01G 4/38

(54) **Laminated capacitor**

(30) Priority: 19.03.1997 JP 86050/97
(71) Applicant: MURATA MANUFACTURING CO., LTD., Nagaokakyo-shi Kyoto-fu (JP)
(72) Inventor: Kuroda, Yoichi, Nagaokakyo-shi, Kyoto-fu (JP); Honda, Yukio, Nagaokakyo-shi, Kyoto-fu (JP); Osuga, Kazumi, Nagaokakyo-shi, Kyoto-fu (JP)
(74) Representative: Joly, Jean-Jacques

(57) **Abstract**

A small laminated capacitor which can prevent flashover and has excellent performance in dielectric strength and a large capacity is disclosed. Each gap (G) between internal electrodes (2) on a same plane is set at 2.7 to 20 times the thickness (element thickness t) of a dielectric layer (1) positioned between first and second internal electrode groups (2, 12) which face each other and the distance (D) between the edge of an external terminal (4a) and the edge (a) of the floating internal electrode (2c) closest to the external tenninal among the floating internal electrodes composing the internal electrode group of the outermost electrode layer is set at 0.4 mm to 1.4 mm.

## Description

### BACKGROUND OF THE INVENTION

### 1. Field of the Invention:

The present invention relates to a laminated capacitor and more particularly to a small, high-withstanding and high-capacity laminated capacitor.

### 2. Description of Related Art:

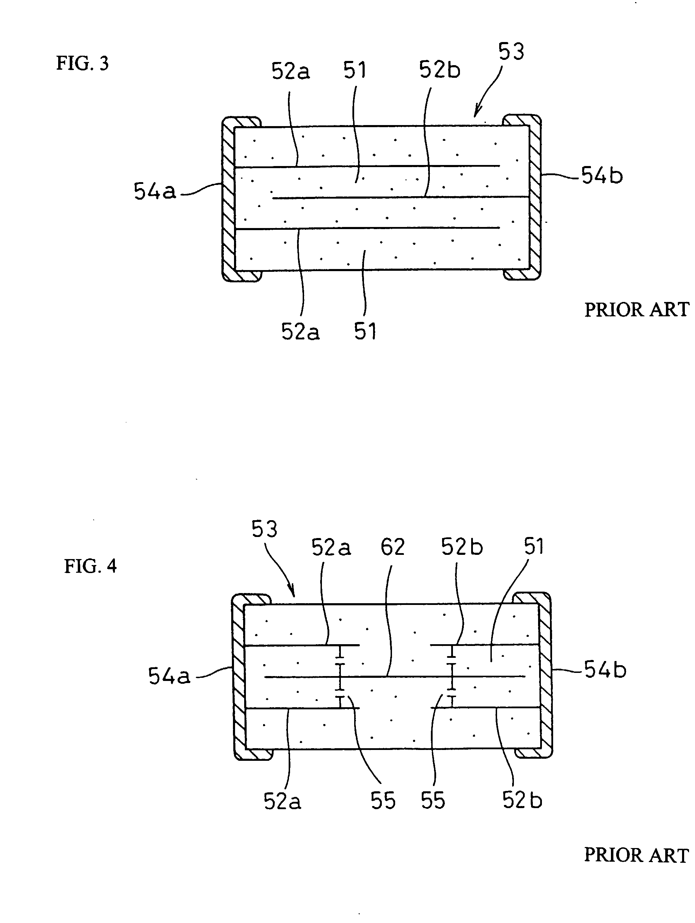

Several types of laminated capacitor are known in the art. Fig. 3 shows a first conventional laminated capacitor, which is in the form of a chip 53 consisting of external terminals 54a, 54b disposed at both ends thereof, internal electrodes 52a, 52b and a dielectric 51. The internal electrodes 52a, 52b are laminated alternately with dielectric layers 51 and are each connected, at one end, to one of the external terminals 54a, 54b. The end at which each internal electrode is connected to an external terminal alternately changes, as shown in Fig. 3.

Fig. 4 shows a second conventional laminated capacitor, which has a double series structure. More precisely, this capacitor comprises, within the dielectric 51, several pairs of internal electrodes 52a, 52b and a floating electrode 62. In each pair of internal electrodes, a first electrode 52a is connected at one end to an external terminal 54a whereas a second electrode 52b, disposed in the same plane as the first electrode 52a, is connected at an opposite end to the other external terminal 54b. The floating electrode 62 is interposed between two pairs of internal electrodes so as not to be connected with any of the external terminals 54a, 54b and such that two serially connected capacitor sections 55 be formed between a given pair of internal electrodes 52a, 52b and the floating electrode 62.

However, the conventional laminated capacitors shown in FIGs. 3 and 4 have the problems that, because the thickness of the dielectric layers interposed between the internal electrodes (hereinafter referred to as "element thickness") must be increased considerably to design a high-withstanding capacitor, not only the value of breakdown voltage per unit thickness of the element thickness becomes low but also the electrostatic capacity which can be obtained becomes small as the element thickness increases. Accordingly, the performance of the dielectric cannot be fully exhibited.

Then, in order to solve such a problem, a laminated capacitor as shown in FIG. 5 has been proposed (Unexamined Published Japanese Patent Application No. 8-037126).

This laminated capacitor has a quadruple series structure formed by alternately disposing first internal electrode groups 2 each comprising a first connected internal electrode 2a connected with one external terminal 4a, a second connected internal electrode 2b connected with another external terminal 4b and a floating internal electrode 2c positioned between the first and second connected internal electrodes 2a and 2b on a same plane, and second internal electrode groups 12 each comprising a plurality (two here) of floating internal electrodes 12a disposed on a plane facing a first internal electrode group 2 via a dielectric (layer) 1 and containing no internal electrode connected to the external terminals 4a or 4b.

Because this laminated capacitor has the multiple series structure as described above and the value of breakdown voltage per element thickness (unit thickness) increases, it becomes possible to use a dielectric having a thin element thickness and therefore to increase the number of laminations. Accordingly, it is possible to obtain a small laminated capacitor having a large capacity and excellent performance in dielectric strength.

However, the laminated capacitor described above has the problem that when a distance D between edges X of the external terminals 4a and 4b and an edge a of the floating internal electrode 2c in the outermost electrode layer is reduced below a certain degree, flashover occurs between the edges X - X of the external terminals 4a and 4b and the value of AC breakdown voltage drops.

Further, it has the problem that when the distance D between the edges X - a is increased, the number of internal electrodes to be laminated must be increased to obtain a desired capacity because the overlapped area of the internal electrodes decreases for the size of the dielectric. There is also the problem that the AC breakdown voltage drops when the number of internal electrodes to be laminated increases.

The conventional laminated capacitor described above further has the problems that the performance in dielectric strength drops when each gap G between the internal electrodes on a same plane is reduced below a certain degree, and that the distance between the edges X - a is reduced and flashover is liable to occur between the edges X - X when the gap G is increased because the floating internal electrode in the outermost electrode layer approaches the external terminal.

### SUMMARY OF THE INVENTION

Accordingly, it is an object of the present invention to solve the aforementioned problems by providing a small laminated capacitor which allows to prevent flashover and has excellent performance in dielectric strength and a large capacity.

The present inventors have conducted various experiments and studies on a structure of a laminated capacitor which is advantageous in both aspects of breakdown voltage and electrostatic capacity to be obtained and which allows to prevent flashover to attain the above-mentioned object and have obtained the following findings.

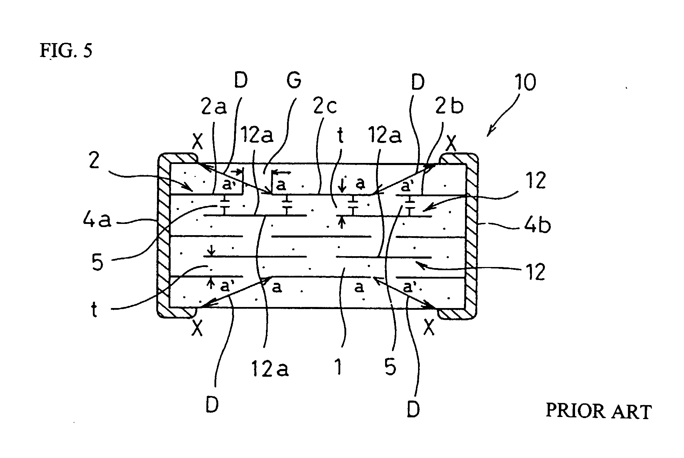

That is, in case of the laminated capacitor having the quadruple series structure as shown in FIG. 5, when a voltage E is applied between the external terminals 4a and 4b, the voltage applied to each capacitor section 5, formed between an electrode of a first internal electrode group 2 and an electrode of a second internal electrode group 12 adjacent to the first group 2, turns out to be E/4 and the voltage between the internal electrodes (between a - a' in FIG. 5) turns out to be E/2. Accordingly, the voltage to be applied is equalised by setting the gap between the internal electrodes (the distance between a - a') G at two times the thickness t of the dielectric interposed between two adjacent internal electrode groups (element thickness). However, according to the experiments, it has been difficult to assure enough reliability as a product just by setting the gap G of the internal electrodes of a same group at two times the element thickness t because the value of breakdown voltage dispersed in a breakdown voltage (BDV) test.

When the gap G between the internal electrodes of a same group is increased too much on the other hand, the distance D between the edge X of the external terminals 4a and 4b and the edge a of the floating internal electrode 2c is reduced and flashover is liable to occur between the edges X -X of the external terminals 4a and 4b, as described above with reference to FIG. 5. Then, when the distance D between the edges X - a is increased in order to avoid such a problem, the overlapped area of the internal electrodes becomes small for the size of the dielectric and no desired capacity can be obtained. When the number of internal electrodes to be laminated is increased in order to compensate this, probability of causing pinholes increases, and the breakdown voltage drops.

The present inventors have conducted experiments and studies further based on such findings and achieved the present invention.

That is, a laminated capacitor comprises a dielectric, external terminals, and internal electrodes disposed within said dielectric and forming with the latter a laminated structure; said laminated capacitor being formed by alternately disposing one or more first internal electrode groups each comprising a first connected internal electrode connected with one of said external terminals, a second connected internal electrode connected with another of said external terminals and a floating internal electrode positioned between said first and second connected internal electrodes on a same plane, and one or more second internal electrode groups each comprising a plurality of floating internal electrodes disposed on one plane facing a first internal electrode group via said dielectric and containing no internal electrode connected to any of said external terminals and by arranging said floating internal electrodes within said first and second internal electrode groups such that four or more serially connected capacitor sections are formed between the first and second connected internal electrodes of a same first internal electrode group; each gap between the internal electrodes on a same plane being set at 2.7 to 20 times the thickness of the dielectric layer positioned between a given first internal electrode group and a given second internal electrode group facing each other; and a distance between an edge of one of said external terminals and an edge of the floating internal electrode closest to said external terminal among the floating internal electrodes composing the internal electrode group of the outermost electrode layer being set at 0.4 mm to 1.4 mm.

It then becomes possible to improve the performance in dielectric strength by setting the gap between the internal electrodes on a same plane at 2.7 to 20 times the thickness of the dielectric layer (element thickness) positioned between first and second internal electrode groups facing each other and to prevent flashover from occurring between the edge of the external terminal and the edge of the floating internal electrode while avoiding the overlapped area of the internal electrodes from decreasing (given that the overlapped area of the internal electrodes cannot be increased in proportion to the size of the dielectric) by setting the distance between the edge of the external terminal and the edge of the floating internal electrode closest to the external terminal among the floating internal electrodes composing the internal electrode group of the outermost electrode layer at 0.4 mm to 1.4 mm.

It is noted that the gap between the internal electrodes of a same group is set at 2.7 to 20 times the element thickness because the value of breakdown voltage disperses when the gap between the internal electrodes is less than 2.7 times the element thickness, becoming difficult to maintain enough reliability as a product, and because the overlapped area of the internal electrodes decreases for the size of the dielectric and it is not preferable when the gap is increased more than 20 times.

The distance between the edge of the external terminal and the edge of the floating internal electrode closest to the external terminal among the floating internal electrodes composing the internal electrode group at the outermost electrode layer is set within the range from 0.4 mm to 1.4 mm because the effect of suppressing the flashover becomes insufficient when the distance is less than 0.4 mm and because the overlapped area of the internal electrodes decreases considerably and it is not preferable when the distance exceeds 1.4 mm.

The above and other advantages of the invention will become more apparent in the following description and the accompanying drawings in which like numerals refer to like parts.

### BRIEF DESCRIPTION OF DRAWINGS

FIG. 1 is a section view of a laminated capacitor fabricated to study the relationship between each gap of the internal electrodes on a same plane and the value of AC breakdown voltage;
FIG. 2a is a plan section view showing a laminated capacitor according to one embodiment of the present invention and FIG. 2b is a front section view thereof;
FIG. 3 is a section view showing a conventional laminated capacitor;
FIG. 4 is a section view showing another conventional laminated capacitor; and
FIG. 5 is a section view showing still another conventional laminated capacitor.

### DESCRIPTION OF PREFERRED EMBODIMENTS

A preferred embodiment of the present invention will be described below to explain the inventive characteristic points thereof in detail.

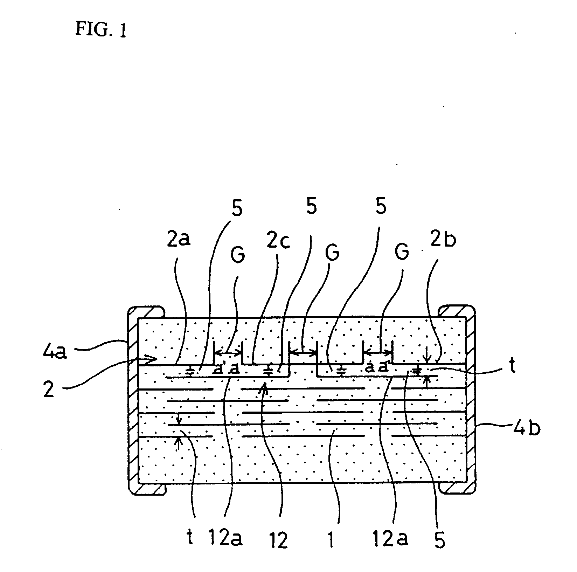

A laminated capacitor as shown in FIG. 1 was fabricated at first in order to study the relationship between each gap between internal electrodes on a same plane and the value of AC breakdown voltage. This laminated capacitor has a quadruple series structure and is formed by alternately disposing first internal electrode groups 2 each comprising a first connected internal electrode 2a connected with one external terminal 4a, a second connected internal electrode 2b connected with another external terminal 4b and a floating internal electrode 2c positioned between the first and second connected internal electrodes 2a and 2b on the same plane, and second internal electrode groups 12 each comprising a plurality (two here) of floating internal electrodes 12a disposed on a plane facing a first internal electrode group 2 via a dielectric (layer) 1 such as ceramics and containing no internal electrode connected to the external terminals 4a or 4b. The thickness t of the dielectric layer interposed between two given adjacent internal electrode groups 2, 12, also referred to as element thickness, is the same for each pair of adjacent first and second internal electrode groups.

The floating internal electrodes 2c, 12a of the first and second internal electrode groups are not connected to the external terminals 4a, 4b. More precisely, the floating electrodes 2c, 12a are fully surrounded by dielectric so as to be electrically isolated from the external terminals.

As shown in FIG. 1, each first internal electrode group 2 and each second internal electrode group 12 are arranged such that each floating internal electrode (2c and 12a) composing the respective groups faces, via the dielectric 1, respective parts of two electrodes disposed on a same plane adjacent to the plane of the floating internal electrode. For instance, as for the first internal electrode group 2 at the top layer and the second internal electrode group 12 in FIG. 1, four (quadruple) serially connected capacitor sections 5 are formed between the first and second connected internal electrodes 2a and 2b connected to the different external terminals 4a and 4b.

Then, the present inventors studied the value of AC breakdown voltage and the location where breakdown occurs (occurrence rate) in this laminated capacitor by changing, for all internal electrode groups, the distance G between the internal electrodes on a same plane (between a - a' in FIG. 1) as shown in Table 1. Table 1 shows the results.

**Table 1**

| Sample No. | Gap G between Internal Electrodes (µm) | Value of AC Breakdown Voltage (KVrms) | | Location Where Breakdown Occurs | |
|---|---|---|---|---|---|
| | | Average Value | Dispersion | Between Elements (%) | Between Internal Electrodes (between a-a') |
| 1 | 40 to 60 1.3 to 1.9 times the element thickness | 1.90 | 0.34 | 10 | 90 |
| 2 | 60 to 80 2.0 to 2.6 times the element thickness | 2.40 | 0.30 | 60 | 40 |
| 3 | 80 to 100 2.7 to 3.3 times the element thickness | 2.50 | 0.10 | 100 | 0 |
| 4 | 100 to 120 3.4 to 4.0 times the element thickness | 2.50 | 0.12 | 100 | 0 |

As shown in Table 1, in the laminated capacitor in Sample No. 1 in which the gap G between the internal electrodes on a same plane was set at 1.3 to 1.9 times the thickness (element thickness) t of the dielectric interposed between the internal electrodes of two adjacent planes, the value of AC breakdown voltage was as low as 1.90 KVrms and 90 % of breakdown occurred at the gap between the internal electrodes (between a - a' in FIG. 1). In the laminated capacitor of Sample No. 2 in which the gap G between the internal electrodes of a same group was set at 2.0 to 2.6 times the element thickness t, while the value of AC breakdown voltage has increased to. 2.40 KVrms, 40 % of the breakdown occurred at the gap part between the internal electrodes and the occurrence of breakdown became unstable.

In the laminated capacitor of Sample No. 3 in which the gap G between the internal electrodes of a same group was set at 2.7 to 3.3 times the element thickness t, the AC breakdown voltage was as high as 2.50 KVrms, the dispersion was small and no breakdown was seen at the gap part between the internal electrodes.

In the laminated capacitor of Sample No. 4 in which the gap G between the internal electrodes of a same group was set at 3.4 to 4.0 times the element thickness t, the AC breakdown voltage was as high as 2.50 KVrms and the dispersion was small. However, there was a demerit that the overlapped area of the internal electrodes decreased when the gap G between the internal electrodes was increased too much.

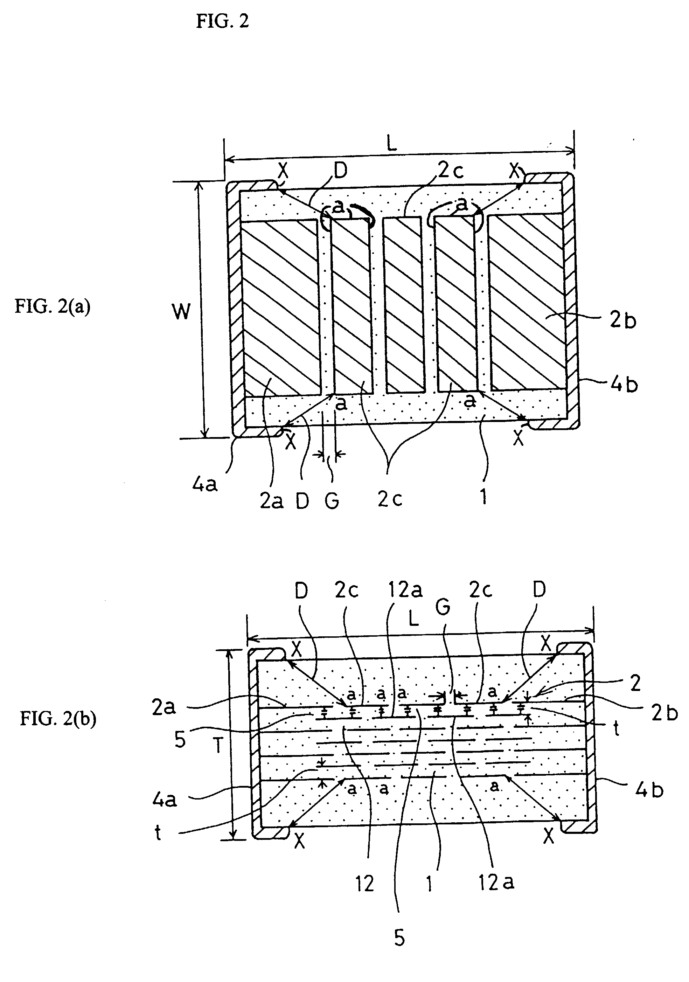

FIG. 2 is a section view showing the laminated capacitor of one embodiment of the present invention.

This laminated capacitor has an octuple series structure and is formed by alternately disposing first internal electrode groups 2 each comprising a first connected internal electrode 2a connected with one external terminal 4a, a second connected internal electrode 2b connected with another external terminal 4b and three floating internal electrodes 2c positioned between the first and second connected internal electrodes 2a and 2b on the same plane, and second internal electrode groups 12 each comprising a plurality (four here) of floating internal electrodes 12a disposed on a plane facing a first internal electrode group 2 via a dielectric (layer) 1 and containing no internal electrode connected to the external terminals 4a or 4b.

Each first internal electrode group 2 and each second internal electrode group 12 are arranged such that each floating internal electrode (2c and 12a) composing the respective groups faces, via the dielectric 1, respective parts of two electrodes disposed on a same plane adjacent to the plane of the floating internal electrode. For instance, as for the first internal electrode group 2 on the top layer and the second internal electrode group 12 in FIG. 2, eight (octuple) serially connected capacitor sections 5 are formed between the first and second connected internal electrodes 2a and 2b connected to the different external terminals 4a and 4b. It is noted that the laminated capacitor of the present embodiment has a dimension of 5.7 mm in length L, 5.0 mm in width W and 2.0 mm in thickness T.

Then, the present inventors studied the value of AC breakdown voltage and the flashover occurrence rate in this laminated capacitor by changing the distance D between the edge X of the external terminals 4a and 4b and the edge a of the floating internal electrodes 2c respectively closest to the external terminals 4a and 4b at the outermost electrode layer (i.e., the electrode layer that is closest, in a direction perpendicular to the planes of the internal electrode groups, to an end side of the capacitor and to the edge X of the external terminals, namely the first internal electrode group 2 shown in FIG. 2) within a range from 0.2 to 1.6 mm and by changing the total number of internal electrodes within the capacitor within a range from 5 to 53. Table 2 shows the results.

**Table 2**

| Sample No. | Distance between Edge X of External Terminal and Edge a of Internal Electrode D (mm) | Number of Internal Electrodes Laminated | Value of AC Breakdown Voltage (KVrms) | | | Flashover Occurrence Rate (%) |
|---|---|---|---|---|---|---|
| | | | Av. | Max. | Min. | |
| 1 | 0.2 | 5 | 3.5 | 3.8 | 2.5 | 100 |
| 2 | 0.3 | 5 | 3.8 | 4.9 | 2.5 | 70 |
| 3 | 0.4 | 5 | 4.8 | 5.2 | 4.5 | 0 |
| 4 | 0.5 | 7 | 4.8 | 5.2 | 4.4 | 0 |
| 5 | 0.6 | 7 | 4.7 | 5.3 | 4.3 | 0 |
| 6 | 1.2 | 13 | 4.8 | 5.2 | 4.5 | 0 |
| 7 | 1.3 | 15 | 4.6 | 5.1 | 4.4 | 0 |
| 8 | 1.4 | 19 | 4.7 | 5.3 | 4.4 | 0 |
| 9 | 1.5 | 27 | 4.4 | 4.9 | 3.8 | 0 |
| 10 | 1.6 | 53 | 4.0 | 4.5 | 3.4 | 0 |

As shown in Table 2, in the laminated capacitors of Sample Nos. 1 and 2 in which the distance D between the edges X - a was set at 0.2 mm and 0. 3 mm, respectively, not only the value of AC breakdown voltage was as low as 3.5 KVrms (Sample No. 1) and 3.8 KVrms (Sample No. 2), respectively, but also the flashover occurrence rate was as high as 100 % (Sample No. 1) and 70 % (Sample No. 2), respectively.

In the laminated capacitors of Sample Nos. 9 and 10 in which the distance D between the edges X - a was set at 1.5 mm and 1.6 mm, respectively, the value of AC breakdown voltage was as low as 4.4 KVrms (Sample No. 9) and 4.0 KVrms (Sample No. 10), respectively, though no flashover was seen to occur.

In the laminated capacitors of Sample Nos. 3 through 8 in which the distance D between the edges X - a was set at 0.4 mm to 1.4 mm, favourably the value of AC breakdown voltage was 4.6 to 4.8 KVrms, and no flashover was seen to occur.

It has been confirmed from the above-mentioned embodiments that it is possible to improve the performance in dielectric strength by setting the gap G between the internal electrodes on a same plane at 2.7 to 20 times the element thickness t and to prevent efficiently flashover from occurring between the edge of an external terminal and the edge of a floating internal electrode while avoiding the overlapped area of the internal electrodes from decreasing by setting the distance D between the edge X of the external terminal and the edge a of the floating internal electrode at 0.4 mm to 1.4 mm.

It is noted that although the above-mentioned embodiment has been explained by exemplifying the laminated capacitor having an octuple series structure, the present invention can be widely applied to laminated capacitors having four or more serially connected capacitor sections.

Further, the inventive laminated capacitor has no specific restriction on the number of internal electrodes to be laminated, the element thickness and the like.

The present invention is not limited to the above-mentioned embodiments also in other points. It can be applied in various ways and modified within the scope of the gist of the invention concerning the kind of the material composing the dielectric, the concrete shape of the internal electrode and the external terminal and the like.

As described above, in the inventive laminated capacitor, it is possible to reliably prevent flashover from occurring between the edges of the external terminals while avoiding the overlapped area of the internal electrodes from decreasing (given that the overlapped area of the internal electrodes cannot be increased in proportion to the size of the dielectric) by setting the gap between the internal electrodes on a same plane (for all internal electrode groups) at 2.7 to 20 times the thickness of the dielectric layer (element thickness) positioned between first and second internal electrode groups which face each other and by setting the distance between the edge of an external terminal and the edge of the floating internal electrode closest to said external terminal among the floating internal electrodes composing the internal electrode group of the outermost electrode layer at 0.4 mm to 1.4 mm.

Accordingly, the present invention can provide the small laminated capacitor which can prevent flashover and which has the excellent performance in dielectric strength and a large capacity.

While the invention has been described in detail and with reference to specific embodiments thereof, it will be apparent to one skilled in the art that various changes and modifications can be made therein without departing from the spirit and scope thereof.

## Claims

1. A laminated capacitor comprising a dielectric (1), external terminals (4a, 4b), and internal electrodes (2, 12) disposed within said dielectric (1) and forming with the latter a laminated structure;
said laminated capacitor being formed by alternately disposing one or more first internal electrode groups (2) each comprising a first connected internal electrode (2a) connected with one (4a) of said external terminals, a second connected internal electrode (2b) connected with another (4b) of said external terminals and a floating internal electrode (2c) positioned between said first and second connected internal electrodes on a same plane, and one or more second internal electrode groups (12) each comprising a plurality of floating internal electrodes (12a) disposed on one plane facing a first internal electrode group (2) via said dielectric (1) and containing no internal electrode connected to any of said external terminals (4a, 4b) and by arranging said floating internal electrodes within said first and second internal electrode groups (2, 12) such that four or more serially connected capacitor sections (5) are formed between the first and second connected internal electrodes (2a, 2b) of a same first internal electrode group (2);
each gap between the internal electrodes on a same plane being set at 2.7 to 20 times the thickness of the dielectric layer positioned between a given first internal electrode group (2) and a given second internal electrode group (12) facing each other; and
a distance between an edge of one of said external terminals and an edge of the floating internal electrode closest to said external terminal among the floating internal electrodes composing the internal electrode group of the outermost electrode layer being set at 0.4 mm to 1.4 mm.
